Europäisches Patentamt

European Patent Office

Office européen des brevets

(11) Veröffentlichungsnummer : **0 178 551**
**B1**

(12) **EUROPÄISCHE PATENTSCHRIFT**

(45) Veröffentlichungstag der Patentschrift :
**15.06.88**

(21) Anmeldenummer : **85112559.1**

(22) Anmeldetag : **04.10.85**

(51) Int. Cl.⁴ : **G 01 L 9/10**, G 01 L 9/12,
G 01 L 19/12, G 01 L 9/00

(54) **Auf Druck ansprechender Geber.**

Ein Antrag gemäss Regel 88 EPÜ auf Korrektur der Zeilen 12 und 13 des Anspruchs 1 wurde am 11.10.1985 eingereicht.

(30) Priorität : **15.10.84 CH 4930/84**

(43) Veröffentlichungstag der Anmeldung :
**23.04.86 Patentblatt 86/17**

(45) Bekanntmachung des Hinweises auf die Patenterteilung : **15.06.88 Patentblatt 88/24**

(84) Benannte Vertragsstaaten :
**DE FR GB NL**

(56) Entgegenhaltungen :
FR-A- 1 187 259
GB-A- 2 089 497
US-A- 2 260 837
US-A- 2 950 421
US-A- 3 451 272
US-A- 3 544 876

(73) Patentinhaber : **HUBA CONTROL AG**
**Industriestrasse 17**
**CH-8116 Würenlos (CH)**

(72) Erfinder : **Scherer, Otto**
**Obermatt 52**
**CH-5016 Obererlinsbach (CH)**

(74) Vertreter : **Patentanwälte Schaad, Balass & Partner**
**Dufourstrasse 101 Postfach**
**CH-8034 Zürich (CH)**

## Beschreibung

Die Erfindung bezieht sich auf einen auf Druck ansprechenden Geber nach dem Oberbegriff des Anspruchs 1.

Ein solcher Geber dient zur Umformung des Druckes in eine elektrische Grösse. Die vom Druck abhängige elektrische Ausgangsgrösse des Gebers kann zum Steuern eines elektrischen Kontaktes dienen oder die Eingangsgrösse einer Steuer- oder Regelvorrichtung sein. Ein solcher Geber lässt sich beispielsweise zur Zweipunktregelung oder zu einer stetigen Regelung verwenden. Er kann auch als einfacher Signalgeber dienen.

Ein Geber nach dem Oberbegriff des Anspruchs 1 ist aus der US-PS 2,950,421 bekannt. Die eine Kammer dieses bekannten Gebers steht unter einem Vakuum, während die andere Kammer innerhalb der mit dem Vakuum beaufschlagten Kammer in der Art einer Druckdose ausgebildet ist, welche mit dem zu messenden Druck beaufschlagt werden kann. Die auslenkbare Wand der zweitgenannten Kammer ist mit einer in der mit dem Vakuum beaufschlagten Kammer angeordneten Blattfeder verbunden, welche den beweglichen Kontakt eines Umschalters darstellt. Um die elektrischen Anschlüsse dieses Umschalters aus der Kammer herausführen zu können, sind Kabeldurchführungen erforderlich. Von dem genannten Umschalter bildet der bewegliche Kontakt gegen den einen feststehenden Kontakt einen Kondensator, dessen Luftspalt durch den beweglichen Kontakt veränderbar ist.

Nachteilig sind bei diesem bekannten Geber die Kabeldurchführungen, welche Ursache einer Undichtheit sein können, die einen Verlust des Vakuums zur Folge hat. Ferner ist dieser bekannte Geber nur zur Messung eines Druckes, jedoch nicht zur Messung eines Differenzdruckes geeignet.

Aus der FR-PS 1 187 259 ist ein Messumformer zum Umformen eines Druckes in eine elektrische Grösse mit einem berührungslosen Uebertragungselement bekannt, welches eine, einen Lichtstrahl modulierende Lochblende aufweist. Das berührungslose Uebertragungselement ist dabei mittels eines Stössels mit einer vom Druck beaufschlagbaren Membran gekuppelt. Der Stössel ist bei diesem Messumformer durch eine Oeffnung zum Uebertragungselement herausgeführt, so dass diese Kammer über die genannte Oeffnung mit der umgebenden Atmosphäre verbunden ist. Zur Messung einer Druckdifferenz ist dieser bekannte Messumformer daher nicht geeignet.

Die US-PS 2, 260, 837 zeigt einen Druckgeber mit einem Messumformer mit induktiver Abtastung. Das Uebertragungselement dieses Messumformers ist zwischen zwei Spulen angeordnet, von denen jeder ein u-förmiger Kern zugeordnet ist. Die Uebertragung des Druckes von einem Faltenbalg auf das Uebertragungselement erfolgt mittels eines massiven Stössels, welcher durch eine Membran zentriert ist. Sofern bei diesem bekannten Geber der Druck durch den Faltenbalg aufgenommen wird, verursacht die der Zentrierung dienende Membran eine zusätzliche Reibung, welche die Messgenauigkeit feiner Druckunterschiede nachteilig beeinflusst.

Aus der GB-Patentanmeldung 2 089 497 ist eine Vorrichtung zur Steuerung eines von einer Pumpe gelieferten Mediums bekannt. Ein membrangesteuertes Uebertragungselement in Form einer Blattfeder trägt an seinem Ende eine Fahne, um bei einem Druckanstieg einen Lichtstrahl zu unterbrechen. Das Uebertragungselement befindet sich bei dieser bekannten Anordnung ebenfalls wie bei der vorstehend genannten FR-PS 1 187 259 und der ebenfalls vorstehend genannten US-PS 2,260,837 ausserhalb der Druckkammer.

Die US-PS 3,451,272 zeigt eine barometrische Druckmessdose, welche innerhalb einer u-förmig gebogenen Feder angeordnet ist. Eine solche, keinen Messumformer mit einem berührungslosen Uebertragungselement aufweisende Vorrichtung, dient als Barometer zum Messen des atmosphärischen Luftdruckes.

Der Erfindung liegt die Aufgabe zugrunde, einen als Differenzdruckgeber geeigneten Geber zu schaffen, bei dem keine elektrischen Bauteile mit dem zu messenden Druckmedium in Berührung stehen und der trotzdem eine praktisch hysteresefreie Umformung des Messergebnisses gewährleistet.

Die gestellte Aufgabe wird erfindungsgemäss durch die im kennzeichnenden Teil des Anspruchs 1 angegebenen Merkmale gelöst.

Bei der erfindungsgemässen Lösung ist trotz der Anordnung von zwei zu einer Differenzdruckmessung geeigneten Druckkammern weder für die elektrischen Leitungen noch für die mechanische Uebertragung eine Durchführung erforderlich, um das Messergebnis auf den Bereich ausserhalb der Druckkammern zu übertragen. Durch den Wegfall von Durchführungen entstehen keine Abdichtungsprobleme. Es kommen auch keine elektrischen Bauteile mit dem zu messenden Druckmedium in Berührung, welches je nach Anwendung ein aggressives Gas oder eine aggressive Flüssigkeit sein kann. Durch den Wegfall von mechanischen Durchführungen in Form von Stösseln fallen nicht nur die Abdichtungsprobleme weg, sondern es entsteht auch keine zusätzliche Reibung, wie sie bei Durchführungen unvermeidlich ist.

Durch eine bevorzugte Ausführungsform nach Anspruch 2 lässt sich nicht nur ein Druck gegen die umgebende Atmosphäre messen, sondern auch ein Druckunterschied, beispielsweise zwischen zwei unterschiedlichen Messpunkten in einem Drucksystem.

Aus den Ansprüchen 3 bis 5 sind bevorzugte Ausführungsformen der Erfindung ersichtlich.

Anhand der Zeichnung wird ein Ausführungsbeispiel der Erfindung näher erläutert. Es zeigt :

Fig. 1   einen Druckgeber im Längsschnitt,

Fig. 2 den Druckgeber nach der Fig. 1 in einer Draufsicht,

Fig. 3 eine Blattfeder in einer Seitenansicht als Anker eines Messumformers,

Fig. 4 die Blattfeder in der Draufsicht und

Fig. 5 die Blattfeder im Querschnitt.

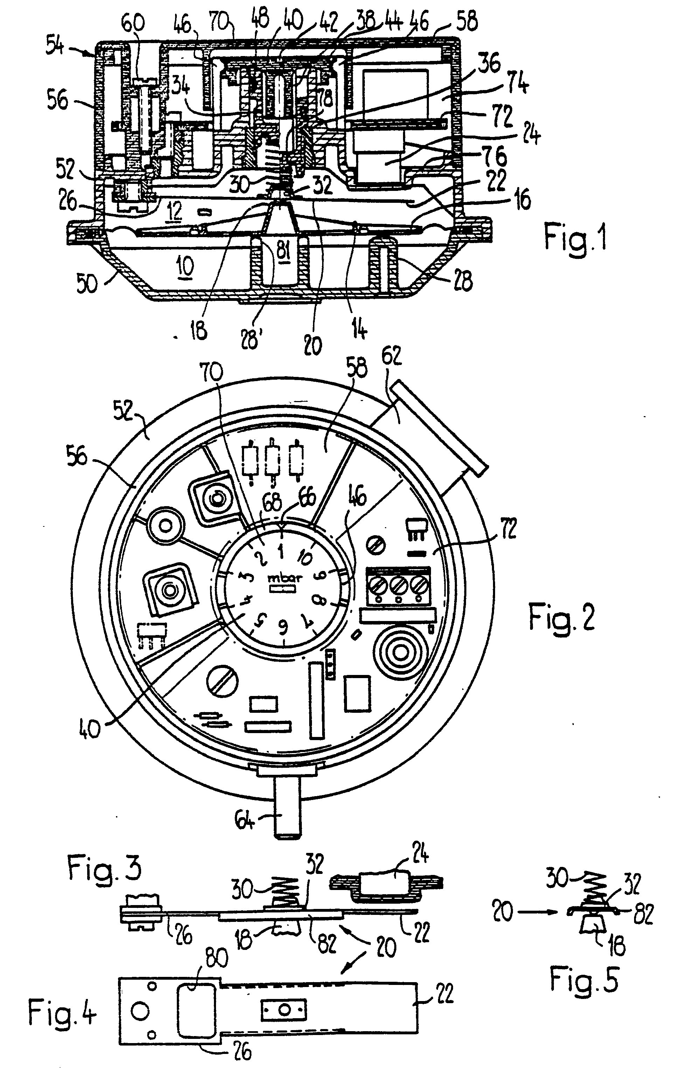

Der in der Fig. 1 dargestellte, auf Druck ansprechende Geber weist eine untere Druckkammer 10 und eine obere Druckkammer 12 auf, welche durch eine Membran 14 voneinander getrennt sind. Beide Druckkammern 10 und 12 weisen je einen in der Fig. 1 nicht dargestellten Druckanschluss auf. Sofern lediglich ein Ueberdruck gegenüber der Atmosphäre gemessen werden soll, wird nur die untere Druckkammer 10 an das zu messende Druckmedium angeschlossen, während die obere Druckkammer 12 mit der Atmosphäre verbunden ist. Beide Druckkammern werden dann angeschlossen, wenn ein Differenzdruck zwischen zwei Druckkreisen zu messen ist. In einem solchen Fall ist zu beachten, dass der Kreis mit dem grösseren Druck an die untere Druckkammer 10 angeschlossen werden muss, da sich die Membran 14 nur in Richtung der oberen Druckkammer 12 bewegen kann.

Auf der Membran 14 liegt ein Membranteller 16, der in seinem Zentrum einen Betätigungsansatz 18 aufweist, der an einer Blattfeder 20 anliegt, deren freies Ende als Anker 22 eines berührungslos wirkenden Messumformers 24 dient und deren anderes Ende 26 gehäusefest eingespannt ist. In der unteren Druckkammer 10, der Ueberdruckkammer, sind mehrere Anschläge 28 und 28' angeordnet, welche den Hub der Membran 14 begrenzen.

Die Membran 14 bewegt sich bei einer Druckbeaufschlagung von der Ueberdruckkammer 10 her in die Unterdruckkammer 12 gegen die Wirkung einer vorgespannten Druckfeder 30 hinein. Die Druckfeder 30 ist koaxial zum Betätigungsansatz 18 angeordnet und mittels einer Zentrierung 32 auf der Blattfeder 20 abgestützt. Mit ihrem anderen Ende ist die Druckfeder 30 in einer Stellschraube 34 abgestützt. Mittels der Stellschraube 34 lässt sich die Vorspannung der Druckfeder 30 und damit der Arbeitsbereich des Druckgebers bzw. der Schaltpunkt bei einer Zweipunktregelung einstellen. In der Fig. 1 ist die Stellschraube 34 links von der Mittellinie auf eine geringe Vorspannung und rechts davon auf eine grosse Vorspannung der Druckfeder 30 eingestellt. Die Stellschraube 34 weist ein sechsgängiges steiles Aussengewinde auf, mit welchem sie in eine Gewindebuchse 36 eingeschraubt ist. Durch ein solches Steilgewinde lässt sich bei etwa einer Umdrehung ein solcher Hub erzielen, wie er beispielsweise durch die unterschiedliche Stellung der Stellschraube 34 links und rechts von der Mittellinie dargestellt ist.

Die Stellschraube 34 ist über eine Rasterwellenverbindung 38 mit einer koaxial angeordneten Skalenscheibe 40 verbunden. Zum Einstellen weist die Skalenscheibe 40 einen Schraubenschlitz 42 auf. Damit die Skalenscheibe 40 unabhängig von der Stellung der Stellschraube 34 stets in einer Ebene bleibt, ist sie umfangsseitig mit einer Ringnut 44 versehen, in welche federelastische Elemente 46 als Schnappverschluss eingreifen.

In die Mantelfläche der Stellschraube 34 ist eine O-Ringdichtung 48 eingelassen, welche einerseits zur Abdichtung der angrenzenden oberen Kammer 12 und andererseits als Drehhemmung der Stellschraube 34 dient. Durch die Anordnung der O-Ringdichtung 48 ist eine zusätzliche Sicherung und Abdichtung der Stellschraube 34, wie sie früher durch Lack üblich waren, nicht mehr erforderlich. Sofern eine betriebsmässige Einstellmöglichkeit des Druckgebers nicht erforderlich ist, kann die Skalenscheibe 40 entfallen und durch einen in den Schnappverschluss 46 einsetzbaren, nicht dargestellten Deckel ersetzt werden. Auf eine betriebsmässige Einstellmöglichkeit kann dann verzichtet werden, wenn der Messumformer 24 ein stetiges Ausgangssignal an einen Regler abgibt, dessen Sollwert beispielsweise an elektrischen Schaltungselementen einstellbar ist.

Im dargestellten Ausführungsbeispiel ist der Messumformer 24 vorzugsweise ein induktiv arbeitender Messumformer, dem der Anker 22 als Uebertragungselement zugeordnet ist. Bei einer Druckbeaufschlagung wird der Anker 22 eine in Abhängigkeit vom Druck und von der Vorspannung der Feder 30 bestimmte Stellung relativ zum Messumformer 24 einnehmen. Der Messumformer 24 liefert seinerseits ein von der Stellung des Ankers 22 abhängiges elektrisches Signal als Eingangssignal für einen elektronischen Regler oder zur Steuerung eines Schaltkontaktes. Anstelle eines induktiven Messumformers ist es jedoch auch möglich, einen kapazitiven oder einen optischen Messumformer vorzusehen. Bei einem optischen Messumformer wird anstelle des Ankers 22 eine Blende als Uebertragungselement verwendet.

Die Druckkammern 10 und 12 sind im wesentlichen durch Druckkammer-Gehäuseteile 50 und 52 begrenzt. Auf dem oberen Druckkammer-Gehäuseteil 52 ist ein oberes Gehäuseteil 54 aufgesetzt, welches die elektrischen beziehungsweise elektronischen Schaltungselemente und das Einstellelement mit der Stellschraube 34 umgibt. Das obere Gehäuseteil 54 besteht aus einem hohlzylindrischen Wandteil 56 und einem Deckel 58. Der Deckel 58 ist mit zwei Schrauben, von denen nur die eine Schraube 60 dargestellt ist, am oberen Druckkammer-Gehäuseteil 52 angeschraubt. Das hohlzylindrische Wandteil 56 ist nach dem Lösen der Schrauben 60 zwischen dem oberen Druckkammer-Gehäuseteil 52 und dem Deckel 58 drehbar.

Aus der Fig. 2 ist ersichtlich, dass am hohlzylindrischen Wandteil 56 eine Kabeldurchführung 62 radial angeordnet ist. Infolge der Drehbarkeit des hohlzylindrischen Wandteils 56 kann die Kabeldurchführung 62 in jede beliebige radiale Richtung eingestellt werden. In der Fig. 2 ist ferner einer der bereits erwähnten Druckanschlüsse dargestellt, nämlich der Druckanschluss 64 der oberen Druckkammer 12. Der Druckanschluss der unteren Druckkammer 10 weist genau in die gleiche Richtung und ist deshalb durch den Druckanschluss 64 verdeckt.

Die Skalenscheibe 40 ist in der Art eines Zifferblattes mit einer Skalenteilung von 1 bis 10 versehen, welche im dargestellten Ausführungsbeispiel mit mbar beschriftet ist. Gegenüber der Skalenteilung befindet sich eine Einstellmarke 66, welche an einer hohlzylindrischen Führung 68 der Skalenscheibe 40 angebracht ist. Der aufgesetzte Deckel 58 des oberen Gehäuseteils 54 weist mindestens in der Fläche der Skalenscheibe 40 einen durchsichtigen Bereich 70 auf. Der übrige Bereich des Deckels 58 kann entweder ebenfalls durchsichtig oder matt oder undurchscheinend sein. Er kann auch weitere durchsichtige Bereiche aufweisen, durch welche hindurch beispielweise Signallämpchen oder eine digitale Druckanzeige sichtbar sind.

Innerhalb des oberen Gehäuseteils 54 ist eine kreisringförmige Leiterplatte 72 angeordnet, welche das Einstellelement 34 koaxial umgibt und welche die Schaltungselemente einer Auswerteschaltung und den Messumformer 24 trägt.

Das obere Gehäuseteil 54 begrenzt umfangsseitig und nach oben gerichtet den die Schaltungselemente und das Einstellelement 34 enthaltenden Raum 74, der gegen die obere Druckkammer 12 durch eine Wandung 76 abgegrenzt ist.

Zwischen der Druckfeder 30 und der Stellschraube 34 ist eine Kappe 78 als Druckfederlager angeordnet. Diese Kappe bietet einen Schutz gegen Verdrehung der Druckfeder 30 beim Verstellen der Stellschraube 34. Anhand der bereits beschriebenen Einzelteile ist erkennbar, dass beim Drehen der Skalenscheibe 40 infolge der eingelassenen Rasterwellenverbindung 38 nur die Stellschraube 34 in axialer Richtung bewegt wird. Durch eine solche Anordnung lässt sich die Bauhöhe des Gehäuses auf ein Minimum beschränken. Die Rasterwellenverbindung 38 ist dabei so ausgebildet, dass ausser der Mitnehmerfunktion auch ein Abgleichen der Skala auf den effektiven Druckwert bei der Montage des Gebers möglich ist. Der Schnappverschluss 46 ermöglicht ein leichtes Herausnehmen der Skalenscheibe 40 von Hand ohne Zuhilfenahme von Werkzeugen.

Obwohl die Membran 14 im dargestellten Ausführungsbeispiel an den Anschlägen 28 und 28' anliegt, ist auch eine nicht dargestellte Ausführung mit einem schwebenden Nullpunkt möglich, bei welcher Ausführung das Eigengewicht der Membran 14 durch eine Gegenfeder mit Gegenstützteller kompensiert wird. Eine solche nicht dargestellte Gegenfeder lässt sich beispielsweise in dem Raum 81 unterhalb der Membran 14 anordnen. Eine solche Ausführung ist insbesondere bei Verwendung des Gebers für ein stetiges Ausgangssignal und bei einer Einbaulage mit nach oben gerichteter Druckfeder 30 erforderlich.

Um die Einflüsse der Umgebungstemperatur zu kompensieren, kann die Druckfeder 30 mit mindestens einem Bimetallelement in Reihe angeordnet sein.

Obwohl im dargestellten Ausführungsbeispiel als Uebertragungselement der Anker 22 als Ende der Blattfeder 20 vorgesehen ist, ist es auch möglich, beispielsweise einen Ferritkern vorzusehen, welcher mit der Membran gekoppelt und innerhalb einer Spule des Messumformers verschiebbar angeordnet ist. Die elektrische beziehungsweise elektronische Schaltungsanordnung eines für den vorgesehenen Verwendungszweck geeigneten Messumformers wird als bekannt vorausgesetzt.

In besonderen Anwendungsfällen kann der Fachmann auch entscheiden, dass anstelle der im Ausführungsbeispiels dargestellten Membran ein Kolben als bewegbare Wand verwendet wird.

Die Fig. 3, 4 und 5 zeigen ein Ausführungsbeispiel für die in der Fig. 1 nur schematisch dargestellte Blattfeder 20. Aus den Fig. 3 und 5 ist ersichtlich, dass die Blattfeder 20 in ihrem mittleren Bereich durch ein u-förmiges Profil verstärkt ist. Aus der Fig. 4 ist ersichtlich, dass die Blattfeder 20 im Bereich ihrer Einspannstelle 26 eine Aussparung 80 zur Verminderung der Federkonstante aufweist. Durch die Schwächung der Blattfeder 20 im Bereich ihrer Einspannstelle 26 und durch die Versteifung im mittleren Bereich in Form des u-förmigen Profils lässt sich für den vorgesehenen Verwendungszweck eine besonders massearme Blattfeder herstellen.

## Patentansprüche

1. Auf Druck ansprechender, ein elektrisches Ausgangssignal liefernder Geber mit zwei durch eine Wand (14) von einander getrennten Kammern (10, 12), welche Wand (14) bei Druckbeaufschlagung der einen Kammer (10) auslenkbar ist und in ihrem mittleren Bereich mechanisch an eine in der anderen Kammer (12) angeordnete, einerends (26) fest eingespannte Blattfeder (20) gekoppelt ist, deren freies Ende als berührungsloses Uebertragungselement (22) mit einem Messumformer (24) zusammenwirkt, dadurch gekennzeichnet, dass der Messumformer (24) ausserhalb der durch Wände (76) aus Isolierstoff oder aus einem metallischen, unmagnetischen Werkstoff begrenzten Kammern (10, 12) angeordnet ist.

2. Geber nach Anspruch 1, dadurch gekennzeichnet, dass zum Messen eines Differenzdruckes jede der beiden Druckkammern (10, 12) einen Druckanschluss (64) aufweist.

3. Geber nach Anspruch 1 oder 2, dadurch gekennzeichnet, dass die eine geringe Masse aufweisende Blattfeder (20) in ihrem mittleren Bereich durch ein im Querschnitt u-förmiges Profil (82) versteift ist.

4. Geber nach einem der Ansprüche 1 bis 3, dadurch gekennzeichnet, dass die Blattfeder (20) im Bereich ihrer Einspannstelle (26) durch eine Aussparung (80) zur Verminderung der Federkonstante geschwächt ist.

5. Geber nach einem der Ansprüche 1 bis 4, dadurch gekennzeichnet, dass der Messumformer (24) ein induktiver Messumformer und das Uebertragungselement (22) ein Anker des Messumformers ist.

## Claims

1. A pressure-responsive transducer delivering an electric output signal with two chambers (10, 12) separated from each other by a wall (14), which wall (14) is deflectable on pressure-loading of the one chamber (10) and is mechanically coupled in its central area to a leaf spring (20) arranged in the other chamber (12) and firmly clamped at one end (26), the free end of which leaf spring (20) interacts as a contactless transmission element (22) with a measuring transducer (24), characterized in that the measuring transducer (24) is arranged outside the chambers (10, 12) defined by walls (76) of insulating material or of a metallic, non-magnetic material.

2. A transducer according to claim 1, characterized in that each of the two pressure chambers (10, 12) comprises a pressure connection (64) for measuring a differential pressure.

3. A transducer according to claim 1 or claim 2, characterized in that the low-weight leaf spring (20) is reinforced in its central area by a cross-sectionally U-shaped profile (82).

4. A transducer according to any one of claims 1 to 3, characterized in that the leaf spring (20) is weakened in the area of its clamping point (26) by a recess (80) for reduction of the spring constant.

5. A transducer according to any one of claims 1 to 4, characterized in that the measuring transducer (24) is an inductive measuring transducer and the transmission element (22) is an core of the measuring transducer.

## Revendications

1. Capteur sensible à la pression, fournissant un signal de sortie électrique, comportant deux chambres (10, 12) séparées l'une de l'autre par une paroi (14), laquelle (14) peut être déviée lors de l'application d'une pression à la première chambre (10) et est mécaniquement couplée, dans sa région médiane, à un ressort à lame (20) agencé dans l'autre chambre (12) et doté d'une extrémité (26) fixée par encastrement et d'une extrémité libre qui, en tant qu'élément de transmission sans contact (22), coopère avec un convertisseur de mesure (24), caractérisé par le fait que le convertisseur de mesure (24) est disposé à l'extérieur des chambres (10, 12) délimitées par des parois (76) en matière isolante ou en une matière métallique non magnétique.

2. Capteur selon la revendication 1, caractérisé par le fait que, pour la mesure d'une pression différentielle, chacune des deux chambres de pression (10, 12) présente un raccord de pression (64).

3. Capteur selon revendication 1 ou 2, caractérisé par le fait que le ressort à lame (20) présentant une faible masse est raidi, dans sa région médiane, par un profil (82) ayant, en coupe transversale, une forme en U.

4. Capteur selon l'une des revendications 1 à 3, caractérisé par le fait que le ressort à lame (20) est affaibli dans la région de son point d'encastrement (26), par un évidement (80) afin de réduire sa constante de rappel.

5. Capteur selon l'une des revendications 1 à 4, caractérisé par le fait que le convertisseur de mesure (24) est un convertisseur inductif et l'élément de transmission (22) est une armature mobile de ce convertisseur de mesure.

Fig.1

Fig.2

Fig.3

Fig.4

Fig.5